Europäisches Patentamt

(19) European Patent Office

Office européen des brevets

(11) Numéro de publication : **0 276 270 B1**

## (12) FASCICULE DE BREVET EUROPEEN

(45) Date de publication du fascicule du brevet :
23.10.91 Bulletin 91/43

(21) Numéro de dépôt : 87904901.3

(22) Date de dépôt : 05.08.87

(86) Numéro de dépôt international :
PCT/FR87/00305

(87) Numéro de publication internationale :
WO 88/00933 11.02.88 Gazette 88/04

(51) Int. Cl.$^5$ : **C04B 35/58**, C04B 38/00,
B28B 1/26

(54) **PROCEDE DE FABRICATION DE MOULES EN NITRURE DE SILICIUM POREUX POUR COULEE SOUS PRESSION.**

(30) Priorité : 07.08.86 FR 8611602

(43) Date de publication de la demande :
03.08.88 Bulletin 88/31

(45) Mention de la délivrance du brevet :
23.10.91 Bulletin 91/43

(84) Etats contractants désignés :
AT BE CH DE FR GB IT LI LU NL SE

(56) Documents cités :
BE-A- 517 046
FR-A- 1 073 407
FR-A- 2 318 840
GB-A- 1 490 543
GB-A- 2 105 316
CHEMICAL ABSTRACTS, vol. 104, no. 22, 2 juin
1986 (Columbus, Ohio, US); H.J. Kleebe et
al.:"Influence of silicon-powder characteristics on the pore structure of silicon-powder
compacts and reaction-bonded silicon nitride", p. 318, résumé no. 191476h

(73) Titulaire : **CERAMIQUES TECHNIQUES
DESMARQUEST
Tour Manhattan Place de l'Iris 6 La Défense 2
92400 Courbevoie (FR)**

(72) Inventeur : **TORRE, Jean-Paul
36, allée de la Prédecelle
Cernay la Ville F-78720 Dampierre (FR)**
Inventeur : **BIGAY, Yves
9, allée des Romarins
F-78180 Montigny (FR)**
Inventeur : **MAIN, Gérard
17, rue Arthur Petit
F-78220 Viroflay (FR)**
Inventeur : **BLANCHET, Jean-Pierre
45, rue Félix Faure
F-92700 Colombes (FR)**

(74) Mandataire : **Vanlaer, Marcel et al
PECHINEY 28, rue de Bonnel
F-69433 Lyon Cédex 3 (FR)**

## Description

## DOMAINE TECHNIQUE

La présente invention se rapporte à un procédé de fabrication de pièces de formes, en nitrure de silicium ayant une porosité ouverte réglable tout en présentant une très bonne tenue mécanique, et pouvant servir à toutes opérations de séparation liquide-solide, gaz-solide, gaz-liquide, liquide-liquide, y compris sous pression (filtration, dévésiculage) et en particulier à la fabrication de moules poreux utilisés pour la fabrication de pièces céramiques par la méthode de coulée en barbotine sous pression.

## ETAT DE LA TECHNIQUE

On sait obtenir du nitrure de silicium (type RBSN - Reaction Bonded Silicon Nitride) par frittage- réaction : après mise en forme d'une pièce par compactage de poudre de silicium avec ou sans additions destinées à le faciliter, on chauffe ensuite cette pièce en présence d'azote pour obtenir le nitrure de silicium à une température ne dépassant pas en général 1450°C. Cette technique présente l'avantage de conserver les dimensions du comprimé de départ sur la pièce obtenue après traitement thermique (l'augmentation de volume due à la réaction compense la diminution intervenant au moment de la densification); ceci permet la réalisation de pièces de géométrie complexe en minimisant les coûts d'usinage.

Le matériau obtenu a une porosité de l'ordre de 15 à 25 % en volume. Elle se présente sous forme de cavités poreuses dont les dimensions sont en moyenne de 10 $\mu$m à 100 $\mu$m. Toutefois, ces cavités ne sont accessibles que par un réseau capillaire de faible dimension tel que 85 % de la porosité accessible par porosimétrie au mercure a un diamètre en général inférieur à 1 $\mu$m et que son diamètre moyen est inférieur à 0,5 $\mu$m; le faible diamètre de ces canaux ne peut pas assurer un débit de fluide mesurable; la porosité est donc pratiquement fermée. La conséquence de cette forme de porosité est que ce matériau ne présente pas de propriétés de perméabilité suffisantes, et ne peut donc pas être utilisé pour des applications de filtrations.

Par contre, ce produit jouit d'une très bonne inertie chimique et tenue au choc thermique, en même temps que de très bonnes propriétés mécaniques suffisantes pour résister à des applications sous haute pression (10000 bars).

Par ailleurs, des pièces filtrantes peuvent être obtenues par frittage de poudre métallique, ou d'oxydes réfractaires, ou à base de polymères. Les métaux frittés, tout en conduisant à des pièces de porosité contrôlée, présentent les inconvénients de ne pas être inertes chimiquement, notamment dès que le milieu est un peu acide et de ne pas permettre la confection de pièces complexes. Les oxydes frittés sont moins inertes chimiquement que le nitrure de silicium; de plus, du fait de leur retrait lors du frittage, ils ne permettent pas de contrôler de façon aisée et précise la porosité et d'obtenir directement sans usinage des pièces ayant des cotes finales précises; enfin, ils n'ont pas une tenue au choc thermique excellente. En ce qui concerne les pièces filtrantes à base de polymères, la porosité est difficile à réaliser et à régler, de plus elles ne supportent pas la température, n'ont pas la tenue à l'abrasion des produits minéraux frittés et se déforment lorsqu'elles sont utilisées à des applications sous pression.

Pour l'application à des moules filtrants, principalement pour l'obtention d'objets en céramique par coulée en barbotine et pour les raisons invoquées ci-dessus, les métaux et oxydes frittés ne sont pas employés. On utilise habituellement des moules en plâtre ou gypse et plus rarement des moules à base de polymères. Mais les moules en plâtre sont fragiles, sujets à l'érosion lors de la coulée et du nettoyage, et à la corrosion si on emploie, dans la barbotine, de la silice et/ou des adjuvants. Leur durée de vie ne dépasse pas 10 à 50 coulées. Par ailleurs, la fréquence d'utilisation d'un même moule est très longue, environ 5h. entre deux coulées successives; elle pourrait être diminuée considérablement en utilisant la coulée sous pression, mais le moule n'est pas assez solide et son frettage est indispensable, comme cela est indiqué dans le brevet BE 896 853.

Des moules à base de polymère ont aussi été prposés (brevet US 3 929 685) et sont utilisés principalement pour la coulée sous pression. Ainsi, le temps de coulée est ramené à environ 10 minutes, les moules sont réutilisables tout de suite et leur durée de vie doit pouvoir atteindre 10.000 coulées. Mais ils présentent l'inconvénient d'être sujet à des déformations élastiques sous l'action de la pression, ce que rend difficile l'obtention de pièces, notamment creuses, de cotes précises.

De même, le brevet JP60 033272 (Toyo Rubber) décrit des pièces poreuses en nitrure de silicium. La porosité est obtenue dans la pièce crue moulée par coulage d'une mousse de poudre de silicium obtenue à l'aide d'un agent moussant (polyuréthane). La nièce crue est ensuite durcie par réaction de polymérisation avant de subir le traitement thermique de nitruration. Ce procédé où le moussage, qui est à l'origine de la porosité finale, est effectué dans le moule, présente l'inconvénient d'une mise en oeuvre délicate pour obtenir des pièces de structure et de propriétés homogènes; il utilise aussi de grandes quantités de liants organiques

EP 0 276 270 B1

carbonés qui peuvent être à l'origine de la présence parasite de carbure de silicium. Les pores obtenus sont en général de gros diamètre, habituellement supérieur à 100 μm, et les caractéristiques mécaniques sont insuffisantes. Par ailleurs, les pièces ne peuvent être obtenues que par le procédé de coulage, sans pression.

Par le brevet GB 1 490 543, on connaît également du nitrure de silicium poreux pouvant avoir une porosité ouverte de 48 %.

## OBJET DE L'INVENTION

Un objet de l'invention est la fabrication de pièces filtrantes en nitrure de silicium ayant une porosité ouverte réglable, dotées de très bonnes caractéristiques mécaniques permettant son emploi sous fortes pressions, sans détérioration, ni déformation, d'une très bonne tenue aux chocs thermiques et à l'abrasion et d'une très grande inertie chimique, ces pièces étant obtenues directement aux cotes finales, sans usinage ultérieur.

Un autre objet de l'invention est d'obtenir des pièces en nitrure de silicium à pororité ouverte réglable, en utilisant comme procédé de mise en forme de la pièce crue à base de poudre de silicium, les méthodes employées couramment dans l'industrie céramique, et qui peuvent être : le pressage, le coulage, l'extrusion ou l'injection.

Dans ce cas, la porosité finale résulte, d'une part de la porosité initiale de la poudre compactée crue, et d'autre part de la porosité créée au cours du traitement thermique.

Ce principe de fabrication par compactage diffère de celui décrit dans le brevet japonais Toyo Rubber qui présente un matériau dont la structure poreuse est obtenue au stade cru par la formation d'une mousse de polyuréthane.

Un autre objet de l'invention est d'augmenter la porosité du nitrure de silicium du type RBSN, obtenu par frittage nitrurant, la porosité résultant de l'invention pouvant atteindre 40 % avec des diamètres moyens de pores accessibles au mercure pouvant être réglés entre 1 et 50 μm et plus particulièrement aux environs de 3 à 5 μm pour l'obtention de moules poreux destinés à la coulée en barbotine (y compris sous pression) de pièces céramiques.

Un autre objet de l'invention est l'obtention de pièces poreuses en nitrure de silicium contenant peu d'oxynitrure.

Un autre objet de l'invention est d'obtenir une porosité ouverte lors du frittage nitrurant de façon à obtenir des pièces perméables.

Un autre objet de l'invention est l'application de ces pièces filtrantes en nitrure de silicium à tout problème de séparation solide-gaz, solide-liquide, liquide-gaz, liquide-liquide, à froid comme à chaud ou à haute température (jusqu'à 1700°C), sous pression ou non, et utilisable avec un très grand nombre de produits ou atmosphères du fait de son inertie chimique.

Un autre objet de l'invention est l'application à toute opération de filtration, dépoussiérage, dévésiculage, de diffusion de gaz ou de liquide, d'ultrafiltration, d'osmose ou osmose inverse, etc.

Un autre objet de l'invention est l'application particulière de ces pièces filtrantes à l'obtention de moules poreux ou perméables.

Un autre objet de l'invention est l'application particulière de ces pièces filtrantes comme moules poreux pour la coulée en barbotine principalement pour la fabrication de pièces céramiques par coulée simple ou sous pression; ces moules poreux peuvent être également utilisés pour le coulage de métaux fondus, ou de différents matériaux organiques (polymères, plastiques, caoutchouc.

Ainsi, le procédé selon l'invention permet d'obtenir des pièces filtrantes en nitrure de silicium qui sont perméables, qui ont des pores communiquant entre eux par un réseau capillaire, porosité dont on peut à volonté régler le diamètre entre 1 μm et 50 μm, qui restent stables en dimensions lors de leur frittage, un usinage ultérieur des pièces frittées étant ainsi rendu superflu, qui sont inertes chimiquement, résistent à l'abrasion et aux chocs thermiques, ont de bonnes caractéristiques mécaniques, tiennent à la température et peuvent travailler sous contraintes mécaniques, notamment sous forte pression.

## DESCRIPTION DE L'INVENTION

Le procédé selon l'invention, de fabrication de pièces filtrantes en nitrure de silicium ayant une micro-porosité ouverte réglable, en dimension des pores et/ou en volume poreux, tout en présentant de bonnes caractéristiques mécaniques comprend la mise en forme de pièces crues à partir de poudres à base de silicium additionnées éventuellement d'adjuvants de mise en forme des pièces crues pouvant être mis en oeuvre en présence d'eau, puis le frittage-réaction de ces pièces par traitement thermique nitrurant en présence d'une atmosphère azotée et est caractérisé en ce que :

a) on sélectionne la granulométrie de la poudre de silicium de départ, de façon à obtenir une densité et

3

une structure prédéterminées lors de la mise en forme de la pièce crue, cette sélection étant déterminante pour la porosité que l'on retrouvera dans la pièce frittée finale.

b) on mélange à la poudre de silicium de la poudre de silice destinée à obtenir la porosité ouverte désirée tout en conservant de bonnes caractéristiques mécaniques au cours du traitement thermique de nitruration ultérieur.

c) on ajoute éventuellement au mélange de poudres obtenu en b), des composés organiques et/ou réfractaires sous forme de poudres fines de granulométrie choisie, ne réagissant pas avec le milieu lors du traitement thermique de nitruration et concourant à l'ajustement des caractéristiques de la porosité finale.

d) on met en forme ce mélange de poudres, pour obtenir des pièces dites crues, avant d'opérer le frittage-réaction nitrurant, par l'un quelconque des procédés suivants :

– pressage après ajout éventuel d'un adjuvant de pressage, éventuellement soluble ou émulsionnable dans l'eau, à l'aide d'une pression sélectionnée entre 1 et 200 MPa (10 et 2000 bar), en fonction de la porosité finale désirée

– coulage en barbotine, après ajout d'un agent de mise en suspension,

– injection, dans des moules, après ajout de polymères thermoplastiques, à des températures adaptées au polymère utilisé, comprises de préférence entre 70 et 200°C,

– extrusion à travers une filière de forme quelconque, après ajout de polymères plastiques à des températures adaptées aux dits polymères, de préférence entre 70 et 200°C, ou après ajout d'un liant plastifiant organique pouvant être mis en oeuvre en présence d'eau (par ex. methyl cellulose)

e) on procède à un traitement thermique en deux phases :

– la première en chauffant de 20°C jusqu'à une température d'au plus 800°C, à vitesse lente principalement, sous atmosphère inerte ou oxydante et/ou sous pression réduite, pour éliminer les matières organiques utilisées comme adjuvants de mise en forme.

– la deuxième, en chauffant jusqu'à une température de 1500° C, sous atmosphère nitrurante en maintenant une pression partielle de SiO faible, de façon à éliminer les autres matières volatiles ou décomposables, telle que la silice, et à obtenir le nitrure de silicium poreux contenant peu d'oxynitrure.

La matière principale est une poudre de silicium, la qualité "électrométallurgique" du commerce convient. La granulométrie peut varier de 1 µm à 200 µm, de préférence de 50 à 100 µm.

Le contenu du mélange de départ en poudre de silicium qui en constitue l'élément essentiel, varie de 40 % en poids à une valeur qui peut être proche de 100 %, par exemple 98-99 % quand la porosité finale désirée doit être faible.

L'élément additionnel ayant pour rôle d'apporter la perméabilité au matériau tout en lui conservant les bonnes caractéristiques mécaniques du nitrure de silicium du type RBSN habituel, est généralement constitué par la silice qui, réagissant avec le milieu lors du traitement thermique, donne du monoxyde de silicium générant le type de porosité recherchée, non destructrice de la compacité et de la cohésion du matériau.

On peut éventuellement ajouter au mélange de silicium et de silice de départ des éléments additionnels porogènes qui contribuent à l'obtention de ladite porosité finale.

Ces éléments porogènes sont constitués par l'un au moins des éléments appartenant au groupe (1) formé par des produits organiques ou inorganiques inertes chimiquement par rapport au milieu et s'éliminant sous forme gazeuse par pyrolyse, combustion, réaction, au cours du traitement thermique.

Par exemple, ces éléments organiques combustibles ou volatils peuvent être :

– extraits du bois (lignosulfonate)

– méthyl cellulose

– polyéthylène glycol

– alcool polyvinylique.

Les proportions de ces ajouts varient de 0 à 30 % en poids par rapport au silicium présent, selon la porosité à obtenir. Ce type d'additif, s'il permet de jouer, de façon secondaire, sur la porosité finale désirée, a tendance à diminuer la tenue mécanique du produit final obtenu.

Ces additifs qui, comme on le verra, ont principalement pour rôle de faciliter la mise en forme de la pièce crue, sont évacués par pyrolyse, évaporation, combustion ou toute autre réaction gazogène, et leur départ aura pour effet secondaire de contribuer à la porosité ouverte dans le matériau.

En ce qui concerne la silice incorporée dans la poudre de silicium de départ, on utilise généralement une poudre fine de silice électrofondue broyée, à l'exclusion des verres, dont la granulométrie se situe entre 5 et 500 µm et de préférence entre 10 et 200 µm. La quantité d'ajout peut varier de 2 à 30 % et de préférence de 5 à 20 % en poids du silicium de départ, selon la porosité à obtenir.

La création d'une microporosité faite de pores de faibles dimensions communiquant entre eux par un réseau important de capillaires, dont la répartition est homogène dans le matériau, pourrait s'expliquer par la réaction de la silice avec le milieu au cours du chauffage qui provoquerait son départ en partie ou en totalité sous forme de SiO et celui d'une partie du silicium de base selon la réaction : $Si + SiO_2 \rightarrow 2 SiO$.

Un tel phénomène résulte également du maintien d'une faible pression partielle de SiO au cours de la deuxième étape de chauffage et de la présence seulement d'une faible quantité de $SiO_2$ par rapport au Si dans le mélange de départ.

Cette structure poreuse présente l'avantage de conserver au nitrure de silicium obtenu une tenue mécanique voisine de celle du nitrure de silicium type RBSN classique, bien que présentant une porosité ouverte totale plus importante.

Le matériau ainsi obtenu permet d'absorber les débits de fluide nécessaires aux applications de filtration tout en conservant une structure compacte ayant une forte cohésion caractéristique d'une très bonne tenue mécanique.

On peut ajouter éventuellement au mélange de départ en addition ou en substitution des éléments du groupe 1 des éléments réfractaires chimiquement inertes par rapport au milieu et ne formant pas de phase liquide au cours du traitement thermique, choisis parmi l'un au moins des composés appartenant au groupe (2) formé de préférence par : les nitrure, carbure de silicium, l'alumine et plus généralement par les nitrures, les carbures, les autres produits réfractaires, en particulier les oxydes non réductibles par le silicium et ne formant pas de composés entre eux et/ou avec la silice. Dans ce cas, ces poudres jouent le rôle d'une "chamotte" utilisée couramment dans l'industrie céramique.

Le volume et la densité de ces éléments inertes n'évoluant pas au cours de la cuisson ultérieure, on peut limiter ainsi l'augmentation de la densité finale du matériau elle-même due à la nitruration du silicium. La proportion de ces éléments inertes peut varier de 0 à 70%, de préférence de 5 à 50% en poids du silicium de départ.

Parmi les éléments des groupes 1 et 2, on peut en utiliser un seul ou plusieurs en combinaisons selon le résultat désiré dans le produit final. De même, les proportions de ces additions sont ajustées, dans les limites citées, selon le résultat désiré.

La granulométrie des additifs du groupe 2 doit être fine et a un effet sur la porosité et sur les caractéristiques mécaniques du produit obtenu. Généralement, la granulométrie des éléments du groupe 2 se situe entre 0,2 et 300 μm et de préférence entre 10 et 200 μm. Pour des granulométries plus grossières, on observe une diminution nette des caractéristiques mécaniques. Des granulométries plus fines ne sont pas nécessaires et entraînent des inconvénients de manipulation.

La porosité désirée dans la pièce finale peut être obtenue, comme cela a été dit, par la sélection de la répartition granulométrique de l'ensemble des poudres du mélange de départ, mais aussi par la sélection du procédé utilisé pour la mise en forme de la pièce crue.

Cette mise en forme est réalisée selon l'un ou l'autre des procédés suivants:
- le pressage,
- le coulage,
- l'extrusion,
- l'injection.

## 1. Le pressage

Ce procédé consiste tout d'abord à remplir avec le mélange préparé un moule métallique dont la matrice est une empreinte de la pièce souhaitée. Le mélange tel qu'il a été préalablement décrit pourra être additionné d'une part d'un adjuvant organique pouvant être mis en oeuvre en présence d'eau dont le rôle est de faciliter le pressage et d'autre part de donner une tenue mécanique suffisante à la pièce crue au moment du démoulage. Le principal paramètre ayant une incidence sur les propriétés physiques finales, dont sur le spectre poreux du matériau est la répartition granulométrique et la morphologie des poudres utilisées dans le mélange de départ. Comme cela a déjà été mentionné, on utilise des poudres de silicium dont la granulométrie varie de 1 à 200 μm et de préférence de 50 à 100 μm, les éléments d'addition inertes présentant une granulométrie variant de 0,2 à 300 μm plus particulièrement de 10 à 200 μm.

Lors de la mise en forme par pressage, la pression à exercer sur la pièce est également un paramètre influent pour déterminer la porosité finale. Les pressions utilisées sont choisies dans l'intervalle de 1 à 200 MPa (10 à 2000 bars) et particulièrement de 5 à 20 MPa (50 à 200 bars). Comme adjuvant de pressage, on peut utiliser les mêmes produits que ceux précédemment cités en tant qu'éléments porogènes organiques, à savoir :
- extraits du bois,
- méthyl cellulose,
- polyéthylène glycol
- alcool polyvinylique.

## 2) Le coulage

Il consiste à réaliser une barbotine, suspension stable et dense du mélange de départ dans un liquide, que l'on coule dans un moule poreux sur les parois duquel se dépose un empilement compact de particules de poudres, la pièce obtenue par ce procédé subit un séchage à l'air ambiant pendant une quinzaine d'heures suivi d'un étuvage effectué suivant un programme de température prédéterminé de manière à appliquer une température de plus en plus élevée (jusqu'à 100°C) pour éliminer l'eau résiduelle sans provoquer de fissuration de la pièce.

L'ajustement granulométrique est un paramètre aussi important pour la coulée que pour le pressage; bien que les répartitions granulométriques de chaque poudre doivent être adaptées au mode de mise en forme, les limites sont cependant les mêmes que précédemment.

La nature de l'agent de mise en suspension est également un paramètre influent sur les propriétés rhéologiques de la suspension et en conséquence sur le volume de la pièce coulée, donc de la porosité et de la densité obtenue dans le matériau final. On peut utiliser de l'eau, un alcool ou différentes cétones (cyclohexanone, penta hexanone). Tous les adjuvants modifiant les propriétés physicochimiques de la barbotine, en conséquence modifiant sa rhélogie, modifient le volume de la pièce coulée, la porosité et la densité obtenue dans le matériau final.

## 3) L'injection

La mise en forme des pièces peut également être obtenue par le procédé d'injection.

On ajoute au mélange de poudres de départ, par malaxage, des polymères thermoplastiques (polystyrène ou polyéthylène, principalement) en proportions appréciables de manière à former une pâte susceptible de présenter des propriétés rhéologiques autorisant son injection dans un moule; les adjuvants thermoplastiques peuvent être remplacés par les plastifiants organiques susceptibles d'être mis en oeuvre en présence d'eau (par ex. méthyl cellulose). Les températures sont de préférence comprises entre 70 et 200°C. Ce procédé permet la réalisation de pièces de formes très complexes. Il est en particulier réservé à des pièces de faible épaisseur en raison des problèmes posés par l'élimination des polymères par pyrolyse au coeur des pièces épaisses. Mais cet inconvénient peut être évité grâce à l'utilisation de produits polyéthylénés à groupements fonctionnels tels que paraffines, cires d'abeille, polyéthylène glycol, susceptibles de s'éliminer par exsudation à basse température lors de la cuisson.

Comme cités précédemment, les paramètres de la granulométrie des poudres, ainsi que des proportions des ajouts thermoplastiques à utiliser, sont déterminants sur les propriétés finales des pièces obtenues et sont les mêmes que précédemment.

## 4) L'extrusion

La façon de procéder à partir du mélange de poudres de départ est identique à celle utilisée pour l'injection. La pâte obtenue est ensuite extrudée à travers une filière permettant d'obtenir des pièces de forme profilée.

Après la mise en forme de la pièce crue, jar l'un quelconque des procédés décrits, on procède au traitement thermique.

Celui-ci se décompose en 2 phases. La première phase se fait en chauffant de 20°C à au plus 800°C, elle a pour but l'élimination des matières organiques, soit par combustion de celles-ci, soit par évaporation ou pyrolyse. Cette phase peut s'effectuer, sous pression réduite ou atmosphérique, en atmosphère inerte (par exemple d'argon, d'azote) ou sous atmosphère oxydante (par exemple air ambiant). Cette dernière possibilité a pour conséquence d'augmenter la quantité de silice présente dans le matériau par oxydation du silicium.

La seconde phase se fait en chauffant ensuite jusqu'à une température d'environ 1500° C. Elle permet, tout en terminant l'évacuation des matières organiques, l'élimination de la silice et la réaction de nitruration du silicium. L'atmosphère est obligatoirement à base d'azote, qui peut être de l'azote technique ou de l'ammoniac. La pression totale de l'atmosphère du four peut être inférieure ou supérieure à la pression atmosphérique, mais de préférence, elle est aux environs de la pression atmosphérique et plus particulièrement supérieure à celle-ci, par exemple de 2,9 kPa (30 g/cm²).

Il est nécessaire de maintenir, au cours de cette deuxième étape, une pression partielle de SiO faible pour éviter la formation d'oxynitrure, qui pourrait être générée par réaction de Si, $SiO_2$ et $N_2$ présents, et favoriser l'élimination de $SiO_2$ sous forme de SiO. Cette faible pression partielle est obtenue par exemple par un balayage suffisamment abondant de l'atmosphère du four par le gaz nitrurant pour maintenir la pression partielle de SiO à une valeur inférieure en général à 5 % et de préférence à 2,5 %, de la pression totale. Ainsi, le renouvellement de l'atmosphère de l'enceinte peut atteindre 20 fois son volume au cours de la phase de nitruration.

EP 0 276 270 B1

Pour améliorer ces 2 réactions, il est possible d'ajouter à l'atmosphère azotée un autre composé gazeux ou non, destiné à rendre l'atmosphère plus réductrice, par exemple l'hydrogène.

Dans certains cas, lorsque, par exemple, la quantité de produits organiques est faible, le chauffage peut s'effectuer en une seule étape. L'exothermicité de la réaction est contrôlée de façon identique à ce qui est fait dans le procédé habituel de nitruration, par exemple par action sur le cycle thermique ou sur l'introduction de l'agent azoté.

Ainsi, on obtient des pièces filtrantes dont la micro-porosité ouverte a été prédéterminée par les caractéristiques du mélange de départ et par les conditions opératoires utilisées lors de la mise en forme des pièces crues. L'élément de base de ces pièces est le nitrure de silicium; le rapport oxynitrure sur nitrure ne dépasse pas en général 15 %, grâce à l'emploi simultané d'une faible pression partielle de SiO et d'un faible rapport $SiO_2/Si$ dans le mélange de départ; mais on peut également retrouver les éléments réfractaires inertes additionnés, régulièrement dispersés dans le squelette de $Si_3N_4$, de même que quelques impuretés non volatiles ou non décomposables qui peuvent être présentes dans les matières premières de départ (silicium, silice).

La structure microporeuse des pièces filtrantes peut être décrite ainsi:
– la porosité ouverte totale se situe entre 15 et 65 %, de préférence entre 20 et 40 %
La densité finale des pièces filtrantes se situe ainsi entre 1,2 et 2,5 et de préférence entre 1,9 et 2,4; elle voisine ainsi la densité du produit RBSN classique.
– le diamètre moyen des pores accessible au mercure se situe entre 1 μm et 50 μm et de préférence entre 1 et 20 μm et est généralement centré autour d'environ 3 μm à 5 μm.

Ceci est l'image d'un réseau très important de capillaires reliant les pores, permettant par leur volume global le débit nécessaire de filtration et assurant par leur faible section la retenue des grains qu'ils seront amenés à filtrer, ces derniers ne devant pas pénétrer dans la porosité. Par comparaison, un produit RBSN classique a une porosité d'environ 20% qui est fermée.

La porosité ouverte et l'aptitude à la filtration ont été mises en évidence en mesurant le débit d'air traversant une paroi de 10 $cm^2$ de surface et de 4 cm d'épaisseur, sous une pression de 50 kPa (0,5 bar).

On a ainsi mesuré des débits d'air allant de 0 pour un matériau type RBSN classique fabriqué selon l'art antérieur, à au moins 20 1/h (soit 0,16 1 $cm/cm^2$ kPa) (16 1 $cm/cm^2$ bar), valeur qui représente le débit d'air mesuré dans les mêmes conditions que ci-dessus, à travers une pièce de plâtre de la qualité utilisée habituellement pour la coulée en barbotine des pièces céramiques et jusqu'à 5000 1/h (soit 40 1 $cm/cm^2$ kPa) (4000 1 $cm/cm^2$ bar).

Simultanément pour ces matériaux, les caractéristiques mécaniques et physiques obtenues sont très bonnes, même avec des porosités importantes: la résistance à la traction varie de 5 à 250 MPa, la dilatation thermique entre 20°C et 1000°C est d'environ $3x10^{-6}$, la dureté Vickers d'environ 1200, la résistance à la flexion de 5 à 60 MPa (50 à 600 $kg/cm^2$); la résistance à l'abrasion est proche de celle du RBSN classique.

Les pièces obtenues par le procédé selon l'invention peuvent servir à toutes opérations de séparation solide-gaz, liquide-gaz, liquide-solide; elles conviennent précisément à la confection des moules pour la coulée en barbotine de pièces céramiques, et sont particulièrement adaptées à la coulée sous pression. En effet, leur porosité permet de forts débits de filtration, leur très bonne résistance mécanique est essentielle pour résister à la pression; leur résistance à l'abrasion, l'absence de retrait lors de la cuisson de la pièce crue et l'absence de déformation même sous forte pression permettent d'avoir des pièces aux cotes définitives, sans usinage ultérieur. Ceci est un avantage déterminant pour obtenir des pièces céramiques moulées de formes compliquées.

## EXEMPLES

Les exemples donnés illustrent non limitativement l'invention et montrent en particulier qu'avec un même mode opératoire les propriétés du produit final, porosité d'une part, caractéristiques mécaniques d'autre part, peuvent varier dans de larges limites en ne modifiant que la composition du mélange de départ : granulométrie des composants, leurs proportions, leurs natures, etc.

De même, ils montrent que l'invention permet d'utiliser toutes les techniques classiques de mise en forme des pièces crues pour obtenir des pièces poreuses ayant de bonnes caractéristiques mécaniques.

. Exemple 1

On mélange dans un malaxeur planétaire pendant 5 heures les ingrédients suivants, en poids % du mélange :
– 84 % de poudre de silicium de granulométrie de diamètre moyen égal à 50 μm

7

– 8% de poudre de silice de granulométrie de diamètre moyen égal à 10 μm

– 4% de liant organique à base de lignosulfonate introduit avec 4% d'eau.

Le mélange ainsi obtenu d'un poids total de 5 kg est ensuite pressé uniaxialement dans un moule de 250x250 mm avec une pression de 3,9 Mpa. (40 kg/cm²). Le compacté de poudre ainsi obtenu est ensuite introduit dans un four de 1 m³ environ, porté à 800°C avec une vitesse de montée en température de 10° C/h sous azote, puis à 1500° C, avec une vitesse moyenne de montée en température de 20°C/h, sous atmosphère d'azote dont la pression totale est supérieure à la pression atmosphérique de 2,9 kPa (30 g/cm²), le débit moyen d'azote étant de 10 1/mm.

Le produit ainsi obtenu présente les caractéristiques suivantes:

– densité : 2,20

– porosité : 31 %

– résistance à la flexion : 49 MPa (500 kg/cm²)

– résistance à la compression : 245 MPa (2500 kg/cm²)

– perméabilité : 50 1/h mesuré avec le test défini précédemment.

Le tableau suivant donne le résultat de la répartition du volume poreux accessible par porosimétrie au mercure en fonction du diamètre des pores d'une part pour le nitrure de silicium obtenu, d'autre part pour un produit RBSN classique, à titre de comparaison.

| DIAMETRE DES PORES en μm | VOLUME POREUX EN % | |
|---|---|---|
| | EXEMPLE 1 | RBSN Classique |
| < 0,25 | 1 % | 33 % |
| 0,25 - 0,5 | 3,3 % | 52 % |
| 0,5 - 0,75 | 3,3 % | 5 % |
| 0,75 - 1 | 3,3 % | 3 % |
| 1 - 2,5 | 17,2 % | 3 % |
| 2,5 - 5 | 27,8 % | |
| 5 - 7,5 | 20,5 % | |
| 7,5 - 10 | 20,5 % | |
| 10 - 25 | 0 | |
| 25 - 50 | 1,6 % | |
| 50 - 80 | 0 | |
| 80 - 100 | 0,5 % | 3 % |
| > 100 | 1 % | |

On voit que, dans le cas de l'exemple 1, le diamètre moyen des pores est un peu inférieur à 5 μm alors que celui du RBSN classique est seulement un peu supérieur à 0,3 μm.

. Exemple 2

Les conditions opératoires sont les mêmes que celles de l'exemple 1. le mélange diffère par une granulométrie de la silice introduite, plus grosse :

– 84 % de poudre de silicium de granulométrie de diamètre moyen égal à 50 μm

– 8 % de poudre de silice de granulométrie de diamètre moyen égal à 50 μm

– 4 % de liant organique à base de lignosulfonate introduit avec 4 % d'eau.

Le produit ainsi obtenu présente une porosité améliorée avec les caractéristiques suivantes :
– porosité : 39 %
la répartition du volume poreux est très proche de celle de l'exemple 1 et le diamètre moyen des pores est un peu inférieur à 5 μm.
– résistance à la flexion : 28,4 MPa (290 kg/cm$^2$)
– perméabilité : 100 1/h.

. Exemple 3

Les conditions opératoires sont identiques à celles de l'exemple 1, la composition du mélange de départ en diffère par l'introduction de carbure de silicium inerte :
– 64 % de poudre de silicium de granulométrie de diamètre moyen égal à 50 μm
– 6 % de poudre de silice de granulométrie de diamètre moyen égal à 10 μm
– 22 % de poudre de carbure de silicium de granulométrie de diamètre moyen égal à 50 μm
– 4 % de liant organique à base de lignosulfonate introduit avec 4 % d'eau.
Le produit ainsi obtenu présente une porosité améliorée, du niveau de celle obtenue dans l'exemple 2, mais avec des caractéristiques mécaniques plus faibles (proportion faible de Si). Les caractéristiques sont les suivantes :
– densité 1,90
– porosité 40 %
– résistance à la flexion : 5,9 MPa (60 kg/cm$^2$)
– résistance à la compression : 99,0 MPa (1010 kg/cm$^2$)
– perméabilité 130 1/h.

. Exemple 4

Les conditions opératoires sont les mêmes que dans l'exemple 1. Le mélange de départ en diffère par la quantité d'éléments organiques :
– 77 % de poudre de silicium de granulométrie de diamètre moyen égal à 50 μm
– 7 % de poudre de silice de granulométrie de diamètre moyen égal à 10 μm
– 11 % de liant organique à base de lignosulfonate introduit avec 5 % d'eau.
Le produit ainsi obtenu présente une toujours bonne porosité, une perméabilité améliorée par rapport à celle obtenue dans les exemples 2 et 3 et de bonnes caractéristiques mécaniques. Les caractéristiques sont les suivantes:
– densité 1,95
– porosité 39 %
– résistance à la flexion : 19,6 MPa (200 kg/cm$^2$)
– perméabilité 3501/h.

. Exemple 5

On prépare une barbotine de composition suivante :
– 10 % de poudre de silicium de granulométrie de diamètre moyen égal à 50 μm
– 40 % de poudre de silicium de granulométrie de diamètre moyen égal à 5 μm
– 6,5 % de poudre de silice de granulométrie de diamètre moyen égal à 10 μm
– 20 % de poudre de nitrure de silicium de granulométrie de diamètre moyen égal à 5 μm
– 23 % d'eau
– 0,5 % de défloculant à base de lignosulfonate.
Après une agitation en jarre pendant un temps de 10 heures on verse cette barbotine dans un moule en plâtre ayant un diamètre égal à 150 mm. Au bout de 3 heures, la pièce crue est démoulée, puis séchée en étuve pendant 24 heures. Elle est ensuite portée à 1500°C avec une vitesse de montée en température de 15°C/h sous une atmosphère d'azote.
Le produit obtenu présente les caractéristiques suivantes:
– densité 2
– porosité 35 %
– résistance à la flexion : 39,2 MPa (400 kg/cm$^2$)
– perméabilité 80 1/min pour une épaisseur de 1 cm.

. Exemple 6

On mélange dans un malaxeur planétaire pendant 5 heures, à une température de 85°C, les ingrédients suivants :
 – 60 % de poudre de silicium de granulométrie de diamètre moyen égal à 50 μm
 – 15 % de poudre de silicium de granulométrie de diamètre moyen égal à 5 μm
 – 7 % de poudre de silice de granulométrie de diamètre moyen égal à 10 μm
 – 18 % de liants thermoplastiques à base de paraffine et de cire d'abeille. Le mélange ainsi obtenu est ensuite injecté dans un moule métallique ou extrudé au travers d'une filière.
Les pièces sont portées :
 – en premier lieu à 350°C, à une vitesse de montée en température de 5°C/h sous air,
 – puis à 500°C avec une vitesse de montée en température de 15°C/h sous azote.
Le produit ainsi obtenu présente les caractéristiques suivantes:
 – densité 2,1
 – porosité 34 %.
 – résistance à la flexion : 29,4 MPa (300 kg/cm²)
 – perméabilité 120 1/min pour une épaisseur de 1 cm.

## Revendications

1. Procédé de fabrication de pièces filtrantes en nitrure de silicium ayant une micro-porosité ouverte réglable en volume poreux et/ou en dimension des pores tout en présentant de très bonnes caractéristiques mécaniques, comprenant la mise en forme de pièces crues à partir de poudres à base de silicium additionnées éventuellement d'adjuvants de mise en forme des pièces crues, puis le frittage-réaction de ces pièces, par traitement thermique nitrurant en présence d'une atmosphère azotée, caractérisé en ce que :
   a) on sélectionne la granulométrie de la poudre de silicium en fonction de la porosité désirée dans la pièce finale.
   b) on mélange à la poudre de silicium de la poudre de silice destinée à générer la porosité ouverte désirée tout en obtenant de très bonnes caractéristiques mécaniques au cours du traitement thermique nitrurant ultérieur.
   c) on met en forme ces mélanges de poudres pour obtenir des pièces dites crues par l'un quelconque des procédés de pressage, coulée en barbotine, injection dans des moules ou extrusion à travers une filière.
   d) on procède à un traitement thermique en deux étapes :
      – la première en chauffant de 20°C à une température d'au plus 800°C sous atmosphère inerte ou oxydante ou sous pression réduite de façon à éliminer les matières organiques utilisées dans les adjuvants de mise en forme.
      – la deuxième en chauffant jusqu'à une température de 1500°C sous atmosphère nitrurante en maintenant une pression partielle de SiO faible, de façon à éliminer les autres matières volatiles ou décomposables et à obtenir le nitrure de silicium.
2. Procédé selon la revendication 1 caractérisé en ce que la proportion de silice par rapport à la poudre de silicium peut varier de 2 à 30 % et préférentiellement de 5 à 20 % en poids par rapport au silicium.
3. Procédé selon la revendication 1, caractérisé en ce qu'on maintient la pression partielle de SiO à une valeur inférieure à 5 % de la pression totale et de préférence 2,5 %.
4. Procédé selon l'une quelconque des revendications 1 à 3 caractérisé en ce qu'on ajoute au mélange de poudres obtenu à l'étape b) des composés organiques s'éliminant au cours du traitement thermique.
5. Procédé selon la revendication 4, caractérisé en ce que les composés organiques sont choisis préférentiellement dans le groupe formé par les extraits du bois, méthyl cellulose, polyéthylène glycol, alcool polyvinylique et introduits dans la proportion de 0 à 30 % en poids par rapport au silicium présent.
6. Procédé selon l'une quelconque des revendications 1 à 4 caractérisé en ce qu'on ajoute au mélange de poudres obtenu à l'étape b) en addition ou en substitution aux composés organiques, un ou plusieurs composés réfractaires ne réagissant pas avec le milieu.
7. Procédé selon la revendication 6 caractérisé en ce que les éléments réfractaires inertes chimiquement sont constitués par au moins un produit réfractaire du groupe constitué par le carbure de silicium, le nitrure de silicium.
8. Procédé selon la revendication 6, caractérisé en ce que le composé réfractaire est constitué par l'alumine.
9. Procédé selon l'une quelconque des revendications 7 ou 8, caractérisé en ce que la proportion d'élément réfractaire varie de 0 à 70 % et de préférence de 5 à 50 % en poids par rapport au silicium.

10. Procédé selon l'une quelconque des revendications 1, 2, 3, 4, 6, caractérisé en ce que la granulométrie de la poudre de silicium est choisie entre 1 et 200 μm, de préférence entre 50 et 100 μm, la granulométrie de la silice entre 5 et 500 μm, de préférence entre 10 et 200 μm, et la granulométrie des éléments réfractaires entre 0,2 et 300 μm, de préférence entre 10 et 100 μm, en fonction de la porosité désirée dans la pièce finale

11. Procédé selon l'une quelconque des revendications 1, 2, 3, 4, 6 caractérisé en ce que lors de la mise en forme par pressage on utilise des adjuvants facilitant le compactage, de préférence des extraits du bois, méthyl cellulose, polyéthylène glycol, alcool polyvinylique.

12. Procédé selon l'une quelconque des revendications 1, 2, 3, 4, 6 caractérisé en ce que, lors de la mise en forme par coulée en barbotine, l'agent de mise en suspension est choisi parmi l'eau, un alcool ou différentes cétones, de préférence la cyclohexanone ou la pentahexanone.

13. Procédé selon l'une quelconque des revendications 1, 2, 3, 4,6 caractérisé en ce que, lors de la mise en forme par coulée par injection ou par extrusion et dans le but d'obtenir une pâte, on ajoute des polymères thermoplastiques de préférence polystyrène, polyéthylène et on utilise des températures d'injection choisies dans l'intervalle 70 à 200°C.

14. Procédé selon l'une quelconque des revendications 11, 12, 13 caractérisé en ce que l'adjuvant introduit pour faciliter la mise en forme a une influence dont il faut tenir compte pour l'obtention de la porosité désirée dans la pièce finale.

15. Procédé selon la revendication 1, caractérisé en ce que lors de la deuxième étape, l'atmosphère nitrurante est formée par l'un au moins des composés suivants : azote et ammoniaque.

16. Procédé selon la revendication 1 où, lors de la deuxième étape et dans le but d'améliorer l'élimination de la silice et la nitruration, on ajoute à l'atmosphère de l'hydrogène.

17. Pièces filtrantes en nitrure de silicium à porosité ouverte homogène obtenues selon le procédé de la revendication 1, caractérisées en ce que la porosité se situe entre 15 et 65 %, de préférence entre 20 et 40 % et que simultanément leur résistance à la flexion se situe entre 5 et 60 MPa et leur résistance à la compression se situe entre 50 et 500 MPa.

18. Pièces filtrantes en nitrure de silicium à porosité ouverte homogène obtenues selon le procédé de la revendication 1, caractérisées en ce que le diamètre moyen des pores accessibles au mercure se situe entre 1 μm et 50 μm et de préférence entre 1 μm et 20 μm et que simultanément leur résistance à la flexion se situe entre 5 et 60 MPa et leur résistance à la compression se situe entre 50 et 500 MPa.

19. Pièces filtrantes selon l'une quelconque des revendications 17 ou 18, caractérisées en ce que leur perméabilité permet de les traverser par un débit d'air d'au moins 16 1 par h sur une épaisseur de 1 cm, par cm$^2$ de surface et par bar de pression d'alimentation.

**Patentansprüche**

1. Verfahren zur Herstellung von Filtrierbauteilen aus Siliziumnitrid mit einer offenen, im Porenvolumen und/oder in der Abmessung der Poren regulierbaren Mikroporosität und mit gleichzeitig sehr guten mechanischen Eigenschaften, das die Formgebung von Rohteilen aus Pulvern auf Siliziumbasis mit eventuellem Zusatz von Hilfsstoffen zur Formgebung der Rohteile und danach die Sinterungsreaktion dieser Teile durch nitrierende Wärmebehandlung in Gegenwart einer stickstoffhaltigen Atmosphäre vorsieht, **dadurch gekennzeichnet,** daß:

a) man die Korngröße des Siliziumpulvers als Funktion der im Endbauteil gewünschten Porosität auswählt,

b) man dem Siliziumpulver Siliziumdioxidpulver zumischt, das zur Erzeugung der gewünschten offenen Porosität bei Erhalten sehr guter mechanischer Eigenschaften im Lauf der späteren nitrierenden Wärmebehandlung dient,

c) man diese Gemische von Pulvern zum Erhalten der sog. Rohteile durch irgendeines der Verfahren der Gruppe Pressen, Schlickerguß, Injektion in Formen oder Extrusion durch eine Düse in Form bringt und

d) man eine Wärmebehandlung in zwei Stufen vornimmt:

– die erste unter Erhitzen von 20 °C auf eine Temperatur von höchstens 800 °C in inerter oder oxidierender Atmosphäre oder unter vermindertem Druck derart, um die in den Hilfsstoffen zur Formgebung verwendeten organischen Stoffe zu entfernen, und

– die zweite unter Erhitzung bis auf eine Temperatur von 1500 °C in nitrierender Atmosphäre bei Aufrechterhaltung eines geringen SiO-Partialdrucks derart, um die anderen flüchtigen oder zersetzbaren Stoffe zu entfernen und das Siliziumnitrid zu erhalten.

2. Verfahren nach dem Anspruch 1, dadurch gekennzeichnet, daß das Verhältnis von Siliziumdioxid zum Siliziumpulver von 2 bis 30 % und vorzugsweise von 5 bis 20 Gew.% bezüglich des Siliziums variieren kann.

3. Verfahren nach dem Anspruch 1, dadurch gekennzeichnet, daß man den SiO-Partialdruck bei einem Wert unter 5 % des Gesamtdrucks und vorzugsweise 2,5 % aufrechterhält.

4. Verfahren nach irgendeinem der Ansprüche 1 bis 3, dadurch gekennzeichnet, daß man dem im Schritt b) erhaltenen Pulvergemisch organische Verbindungen zusetzt, die im Lauf der Wärmebehandlung verschwinden.

5. Verfahren nach dem Anspruch 4, dadurch gekennzeichnet, daß die organischen Verbindungen vorzugsweise aus der durch die Holzextrakte, Methylzellulose, Polyethylenglykol, Polyvinylalkohol gebildeten Gruppe gewählt und im Anteil von 0 bis 30 Gew.% bezüglich des vorhandenen Siliziums eingeführt werden.

6. Verfahren nach irgendeinem der Ansprüche 1 bis 4, dadurch gekennzeichnet, daß man dem im Schritt b) erhaltenen Pulvergemisch zusätzlich zu den oder anstelle der organischen Verbindungen eine oder mehrere mit dem Medium nicht reagierende feuerfeste Verbindungen zusetzt.

7. Verfahren nach dem Anspruch 6, dadurch gekennzeichnet, daß die chemisch inerten feuerfesten Elemente aus wenigstens einem feuerfesten Stoff der Gruppe Siliziumkarbid und Siliziumnitrid bestehen.

8. Verfahren nach dem Anspruch 6, dadurch gekennzeichnet, daß die feuerfeste Verbindung aus Aluminiumoxid besteht.

9. Verfahren nach irgendeinem der Ansprüche 7 oder 8, dadurch gekennzeichnet, daß der Anteil an feuerfestem Element von 0 bis 70 % und vorzugsweise von 5 bis 50 Gew.% bezüglich des Siliziums variiert.

10. Verfahren nach irgendeinem der Ansprüche 1, 2, 3, 4, 6, dadurch gekennzeichnet, daß die Korngröße des Siliziumpulvers zwischen 1 und 200 μm, vorzugsweise zwischen 50 und 100 μm, die Korngröße des Siliziumdioxids zwischen 5 und 500 μm, vorzugsweise zwischen 10 und 200 μm, und die Korngröße der feuerfesten Elemente zwischen 0,2 und 300 μm, vorzugsweise zwischen 10 und 100 μm, als Funktion der im Endbauteil gewünschten Porosität gewählt werden.

11. Verfahren nach irgendeinem der Ansprüche 1, 2, 3, 4, 6, dadurch gekennzeichnet, daß man beim Bringen in Form durch Pressen die Kompaktierung erleichternde Hilfsstoffe, vorzugsweise Holzextrakte, Methylzellulose, Polyethylenglykol, Polyvinylalkohol, verwendet.

12. Verfahren nach irgendeinem der Ansprüche 1, 2, 3, 4, 6, dadurch gekennzeichnet, daß beim Bringen in Form durch Schlickerguß das Mittel zum Bringen in Suspension unter Wasser, einem Alkohol oder verschiedenen Ketonen, vorzugsweise Zyklohexanon oder Pentahexanon, gewählt wird.

13. Verfahren nach irgendeinem der Ansprüche 1, 2, 3, 4, 6, dadurch gekennzeichnet, daß man beim Bringen in Form durch Injektionsguß oder durch Extrusion und zwecks Erhaltens einer Paste thermoplastische Polymere, vorzugsweise Polystyrol, Polyethylen, zusetzt und im Bereich von 70 bis 100 °C gewählte Injektionstemperaturen anwendet.

14. Verfahren nach irgendeinem der Ansprüche 11, 12, 13, dadurch gekennzeichnet, daß das zur Erleichterung des Bringens in Form eingeführte Hilfsmittel einen Einfluß hat, dem man zum Erhalten der im Endbauteil gewünschten Porosität Rechnung tragen muß.

15. Verfahren nach dem Anspruch 1, dadurch gekennzeichnet, daß während des zweiten Schritts die nitrierende Atmosphäre durch wenigstens eine der folgenden Verbindungen gebildet wird: Stickstoff und Ammoniak.

16. Verfahren nach dem Anspruch 1, wobei man während des zweiten Schritts und zwecks Verbesserung der Entfernung des Siliziumdioxids und der Nitrierung der Atmosphäre Wasserstoff zusetzt.

17. Filtrierbauteile aus Siliziumnitrid mit einer homogenen offenen Porosität, die gemäß dem Verfahren des Anspruchs 1 erhalten wurden, **dadurch gekennzeichnet,** daß die Porosität zwischen 15 und 65 %, vorzugsweise zwischen 20 und 40 %, liegt und daß gleichzeitig ihre Biegefestigkeit zwischen 5 und 60 MPa liegt und ihre Druckfestigkeit zwischen 50 und 500 MPa liegt.

18. Filtrierbauteile aus Siliziumnitrid mit einer homogenen offenen Porosität, die gemäß dem Verfahren des Anspruchs 1 erhalten wurden, dadurch gekennzeichnet, daß der mittlere Durchmesser der für Quecksilber zugänglichen Poren zwischen 1 μm und 50 μm und vorzugsweise zwischen 1 μm und 20 μm liegt und daß gleichzeitig ihre Biegefestigkeit zwischen 5 und 60 MPa liegt und ihre Druckfestigkeit zwischen 50 und 500 MPa liegt.

19. Filtrierbauteile nach irgendeinem der Ansprüche 17 oder 18, dadurch gekennzeichnet, daß ihre Durchlässigkeit es ermöglicht, sie von einem Luftdurchsatz von wenigstens 16 1/h bei einer Dicke von 1 cm, je cm² Oberfläche und je bar Einspeisungsdruck durchströmen zu lassen.

## Claims

1. Process for producing filtering parts made of silicon nitride and having an open micro-porosity of which the porous volume and/or the dimensions of the pores may be adjusted, while having very good mechanical

EP 0 276 270 B1

characteristics, comprising shaping crude parts from silicon-based powders optionally containing additives for shaping the crude parts, then the reaction sintering of these parts by nitriding heat treatment in the presence of a nitrogenous atmosphere, characterised in that

a) the grain size of the silicon powder is selected as a function of the porosity desired in the final part;

b) silica powder intended to generate the desired open porosity is mixed with the silicon powder, resulting in very good mechanical characteristics during the subsequent nitriding heat treatment;

c) these mixtures of powders are shaped so as to obtain socalled crude parts by any one of the processes of pressing, slip casting, injection in moulds or extrusion through a die;

d) a heat treatment is carried out in two stages:

– the first by heating from 20°C to a temperature of at most 800°C in an inert or oxidising atmosphere or under reduced pressure so as to eliminate the organic materials used in the shaping additives;

– the second by heating to a temperature of 1500°C in a nitriding atmosphere while maintaining a low SiO partial pressure so as to eliminate the other volatile or decomposable materials and to obtain silicon nitride.

2. Process according to claim 1, characterised in that the proportion of silica relative to the silicon powder can vary from 2 to 30% and preferably from 5 to 20% by weight relative to the silicon.

3. Process according to claim 1, characterised in that the SiO partial pressure is kept at a value below 5% of the total pressure and preferably at 2.5%.

4. Process according to any one of claims 1 to 3, characterised in that organic compounds which are eliminated during the heat treatment are added to the mixture of powders obtained during stage b).

5. Process according to claim 4, characterised in that the organic compounds are preferably selected from the group formed by the extracts of wood, methyl cellulose, polyethylene glycol, polyvinyl alcohol and are introduced in a proportion of 0 to 30% by weight relative to the silicon present.

6. Process according to any one of claims 1 to 4, characterised in that one or more refractory compounds not reacting with the medium are added to the mixture of powders obtained in stage b) in addition to or as substitution for the organic compounds.

7. Process according to claim 6, characterised in that the chemically inert refractory elements consist of at least one refractory product from the group consisting of silicon carbide, silicon nitride.

8. Process according to claim 6, characterised in that the refractory compound consists of alumina.

9. Process according to any one of claims 7 or 8, characterised in that the proportion of refractory element varies from 0 to 70% and preferably from 5 to 50% by weight relative to the silicon.

10. Process according to any one of claims 1, 2, 3, 4, 6, characterised in that the grain size of the silicon powder is selected between 1 and 200 μm, preferably between 50 and 100 μm, the grain size of the silica between 5 and 500 μm, preferably between 10 and 200 μm, and the grain size of the refractory elements between 0.2 and 300 μm, preferably between 10 and 100 μm, as a function of the porosity desired in the final part.

11. Process according to any one of claims 1, 2, 3, 4, 6, characterised in that compaction-facilitating additives, preferably extracts of wood, methyl cellulose, polyethylene glycol, polyvinyl alcohol are used during shaping by pressing.

12. Process according to any one of claims 1, 2, 3, 4, 6, characterised in that the suspension agent is selected from water, an alcohol or various ketones, preferably cyclohexanone or pentahexanone, during shaping by slip casting.

13. Process according to any one of claims 1, 2, 3, 4, 6 characterised in that thermoplastic polymers, preferably polystyrene, polyethylene, are added during shaping by casting by injection or by extrusion and with the object of obtaining a paste and injection temperatures selected in the range of 70 to 200°C are employed.

14. Process according to any one of claims 11, 12, 13, characterised in that the additive introduced to facilitate shaping has an influence which has to be taken into consideration for obtaining the porosity desired in the final part.

15. Process according to claim 1, characterised in that the nitriding atmosphere is formed by at least one of the following compounds: nitrogen and ammonia, during the second stage.

16. Process according to claim 1 in which hydrogen is added to the atmosphere during the second stage with the object of improving the elimination of the silica and of improving nitriding.

17. Filtering parts made of silicon nitride having homogeneous open porosity obtained by the process according to claim 1, characterised in that the porosity is between 15 and 65%, preferably between 20 and 40% and that, at the same time, their bending strength is between 5 and 60 MPa and their compressive strength is between 50 and 500 MPa.

18. Filtering parts made of silicon nitride having homogeneous open porosity obtained by the process according to claim 1, characterised in that the mean diameter of the pores accessible to mercury is between

13

1 μm and 50 μm and preferably between 1 μm and 20 μm and in that, at the same time, their bending strength is between 5 and 60 MPa and their compressive strength is between 50 and 500 MPa.

19. Filtering parts according to any one of claims 17 or 18, characterised in that their permeability allows them to be traversed by a flow of air of at least 16 1 per h over a thickness of 1 cm, per $cm^2$ of surface area and per bar of supply pressure.